# FASCICULE DE BREVET EUROPEEN

(11) **EP 3 441 579 B1**
(45) Date de publication et mention de la délivrance du brevet: **29.06.2022**
(21) Numéro de dépôt: 18174595.1
(22) Date de dépôt: 28.05.2018
(51) Int. Cl.: F01D 25/24, F16B 35/06, F16B 39/28

(54) **ENSEMBLE DE TURBOMACHINE POUR MONTAGE À L'AVEUGLE**
TURBOMASCHINENEINHEIT FÜR BLINDMONTAGE
TURBOMACHINE ASSEMBLY FOR BLIND MOUNTING

(30) Priorité: 11.08.2017 BE 201705555
(43) Date de publication de la demande: 13.02.2019
(73) Titulaire: Safran Aero Boosters SA, 4041 Herstal (BE)
(72) Inventeur: PENALVER CASTRO, Enrique, 4877 Olne (BE)
(74) Mandataire: Lecomte & Partners

(56) Documents cités:
- FR-A1- 2 955 895
- GB-A- 785 648

## Description

### Domaine technique

L'invention a trait au domaine de l'assemblage de pièces, plus particulièrement l'assemblage de pièces par vis à l'aveugle. Le domaine d'application de l'invention vise les pièces de turbomachine axiale pour aéronef.

### Etat de la technique

Le document de brevet publié GB 2 500 963 A vise l'assemblage de panneaux de façade. Un orifice borgne 11 est prévu dans un panneau 10. Cet orifice est cylindrique et se termine par une forme non-cylindrique 21 dans laquelle peut s'engager la tête excentrée 35 d'une vis 30. L'orifice est d'un grand diamètre pour laisser passer la tête de vis et cela nécessite l'emploi d'une douille pour maintenir la vis en position dans l'orifice. Cette solution est complexe de par l'usinage du panneau et la nécessité d'une douille. De plus le positionnement angulaire de la tête doit être précis pour que la douille puisse être insérée correctement dans l'orifice.

Le document EP 3 181 918 A1 décrit un moyen d'assemblage pour un sous-ensemble d'une turbomachine. Une vis à tête carrée 21 est introduite en biais dans un orifice 11 (figure 3 de ce document) d'un flanc 10. L'introduction de la vis est particulière car elle ne peut être faite parallèlement à l'axe de l'orifice 11. Ceci complexifie la procédure d'assemblage. Aussi la tête carrée 21 peut générer du matage dans la rainure 15 qui la reçoit. En effet, si la vis pivote sur son axe et que les angles contendants de la tête de vis pénètrent dans le fond de la rainure 15, celle-ci va se déformer. Ceci peut générer des problèmes de fiabilité et donc de sécurité pour les occupants de l'aéronef.

Le document GB 785 648 A décrit un stator muni d'un carter décrivant une veine de passage d'air et un réservoir d'huile vissé sur l'extérieur du carter. Cet assemblage n'est pas transposable aux parties rotatives d'un compresseur de turbomachine, notamment du fait de la force centrifuge qui tendrait à dévisser la vis.

### Résumé de l'invention

### Problème technique

L'invention a pour objectif de pallier au moins un des inconvénients de l'état de la technique susmentionné. Plus particulièrement, l'invention a pour objectif de proposer un ensemble permettant un montage à l'aveugle, ensemble qui est plus simple, moins onéreux et plus fiable que les solutions existantes. Cet objectif est également atteint par un procédé d'assemblage, un procédé de démontage et un rotor selon l'invention.

### Solution technique

L'invention a pour objet un rotor selon la revendication 1.

La conception du rotor est telle que l'orifice débouchant laisse passer la tige filetée mais ne laisse pas passer la tête de vis. Le diamètre de l'orifice est préférentiellement plus proche du diamètre de la tige filetée que du diamètre de la tête. A titre d'exemple, il peut être environ 1 mm plus grand que le diamètre de la tige filetée et être plusieurs millimètres plus petit que le diamètre de la partie excentrée de la tête. Le profil de la tête est de forme elliptique ou circulaire. Lorsque celui-ci est circulaire, il est en fait « excentré » car le centre du cercle est distant de l'axe de la tige filetée. De manière préférée, le point du profil le plus proche de l'axe (R1) et le point le plus loin (R2) sont diamétralement opposés par rapport à l'axe géométrique. Le profil de la surface périphérique est vu dans un plan orthogonal à l'axe géométrique. La surface d'arrêt en rotation peut coopérer avec la surface périphérique dans au moins une position axiale de la vis. La tête toute entière peut présenter une telle surface périphérique « excentrée ». Alternativement, seule une portion axiale de la tête présente une telle surface, le reste de la tête étant coaxial au filet.

Selon l'invention, la première pièce comprend une paroi annulaire pourvue d'une gorge dont le fond forme ladite surface d'arrêt. D'autres surfaces sont naturellement possibles pour venir au contact de la surface périphérique de la tête de vis uniquement dans certaines positions angulaires de la vis. Par exemple une surface de butée plane parallèle à l'axe géométrique peut être prévue.

Selon un mode avantageux de l'invention, la première pièce est de forme générale axisymétrique autour d'un axe parallèle à l'axe géométrique, la pièce comprenant un flanc pourvu dudit orifice.

Selon un mode avantageux de l'invention, la pièce est pourvue d'une surface d'arrêt axial, formant une butée axiale de la tête de vis, lorsque la vis est dans ladite au moins une position angulaire. Préférentiellement, la surface d'arrêt axial est plane et perpendiculaire à l'axe de symétrie de la pièce.

Selon un mode avantageux de l'invention, la surface d'arrêt axial a un bord radial intérieur distant de l'axe géométrique d'une distance comprise entre le rayon mini et le rayon maxi, ces valeurs étant exclues. Ainsi, la surface d'arrêt axial ne retient la vis que dans certaines positions angulaires. Dans les positions où la vis n'est pas retenue, elle peut être extraite de, ou introduite dans l'orifice. Dit autrement, la surface d'arrêt axial et la tête sont configurées telles que dans au moins une première position angulaire la surface d'arrêt axial puisse retenir axialement la tête, et dans au moins une deuxième position angulaire la surface d'arrêt axial est radialement à distance de la tête.

Selon l'invention, la gorge est positionnée radialement à l'intérieur de ladite paroi annulaire. Si la pièce est amenée à tourner autour de son axe, la force centrifuge aura tendance à maintenir la tête de la vis au contact du fond de la gorge et celle-ci n'aura donc aucune tendance au desserrage. Alternativement, dans un mode de réalisation non revendiqué, la gorge peut néanmoins être positionnée radialement à l'extérieur de la paroi annulaire.

Selon l'invention, l'ensemble comprend en outre ladite seconde pièce, celle-ci étant préférentiellement de forme généralement axisymétrique autour de l'axe de la première pièce, et munie d'un orifice traversé par la vis, la première pièce et la deuxième pièce définissant préférentiellement entre elles une chambre annulaire dans laquelle est disposée la tête de la vis. La chambre annulaire peut être essentiellement close en ce sens qu'elle est apte à retenir la tête de vis, tout en communiquant avec l'orifice.

Selon un mode avantageux de l'invention, l'ensemble comprend une pluralité de vis dans une pluralité d'orifices des première et seconde pièces distribués angulairement autour de l'axe. Préférentiellement, les orifices sont équitablement répartis angulairement. Plus préférentiellement, les orifices sont disposés de manière homogène en angle et en éloignement de l'axe principal de symétrie des pièces. Préférentiellement il y a au moins 30 vis. Plus préférentiellement, il y a au moins 50 vis. La distribution angulaire peut alternativement être irrégulière, pour servir de détrompeur lors de l'assemblage.

Selon un mode avantageux de l'invention, la surface d'arrêt en rotation est annulaire et de rayon constant autour de l'axe des pièces, les vis étant identiques. Ainsi, un équilibrage de l'ensemble tournant peut être atteint car la distribution des masses des têtes de vis s'auto-compense.

Selon un mode de réalisation, le rotor comprend un ensemble et un axe de rotation, l'ensemble étant conforme à l'un des modes de réalisation ci-dessus et l'axe géométrique étant éventuellement parallèle à l'axe de rotation.

Selon un mode avantageux de l'invention, le rotor comprend une bride annulaire de fixation, l'orifice étant formé au travers de la bride.

Selon un mode avantageux de l'invention, le rotor est un rotor de compresseur, notamment de compresseur basse-pression.

Selon un mode avantageux de l'invention, le rotor est configuré pour tourner à au moins 3 000 tr/min, préférentiellement au moins 8 000 tr/min et plus préférentiellement au moins 15 000 tr/min.

Selon un mode avantageux de l'invention, la première pièce et/ou la deuxième pièce est/sont monobloc.

L'invention a également pour objet un procédé d'assemblage d'une turbomachine comprenant un ensemble et/ou un rotor, selon l'un des modes de réalisation exposés ci-dessus, le procédé comprenant les étapes suivantes :
(i) introduction de la vis parallèlement à l'axe de l'orifice ;
(ii) rotation de la vis autour de l'axe de la tige filetée jusqu'au contact entre ladite surface périphérique et ladite surface d'arrêt en rotation.

L'étape (ii) de rotation de la vis peut être faite à la main avant l'accostage de la seconde pièce ou faite par l'écrou serré à l'aveugle sans agir sur la tête de la vis.

Selon un mode avantageux de l'invention, le procédé comprend en outre une étape (iii) de mise en contact axial de la tête de vis avec ladite surface d'arrêt axial, la tête étant déplacée axialement vers la surface d'arrêt axial dans le sens inverse du sens d'introduction de la vis de l'étape (i) d'introduction.

Selon un mode avantageux de l'invention, le procédé comprend en outre :
(iv) une étape d'accostage de la deuxième pièce du côté opposé à la tête de vis, de telle sorte que la tige filetée traverse un orifice de la deuxième pièce ;
(v) le serrage d'un écrou sur la tige filetée du côté de la seconde pièce opposé à la première pièce ;
   la rotation de l'écrou lors de l'étape (v) entraînant la rotation de la vis de l'étape (ii).

En effet, lors du serrage de l'écrou à l'aveugle, c'est-à-dire sans action sur la tête de vis et/ou sans contrôle visuel de ladite tête, la rotation de l'écrou va induire une rotation de la tête de vis jusqu'à ce qu'elle soit en butée, c'est-à-dire positionnée dans sa au moins une position angulaire d'arrêt en rotation.

Préférentiellement, l'ensemble de la vis et la première pièce est monté dans le carter de la turbomachine, puis les étapes (iv) et (v) sont réalisées, le serrage de l'écrou se faisant à l'aveugle sans manipulation de la tête.

L'invention a également pour objet un procédé de démontage d'une turbomachine comprenant un ensemble et/ou un rotor selon l'un des modes de réalisation exposés ci-dessus, le procédé comprenant les étapes suivantes :
(x) rotation de la vis autour de l'axe de la tige filetée de manière à décaler angulairement la surface périphérique de la surface d'arrêt axial ;
(xi) translation de la vis le long de l'axe de manière à la sortir de l'orifice.

Selon un mode avantageux de l'invention, l'étape (x) est précédée de l'étape (ix) de desserrage de l'écrou comprenant : une phase initiale, lors de laquelle la rotation de l'écrou entraîne la rotation de la vis, jusqu'à ce que la surface périphérique se dégage du contact de la surface d'arrêt en rotation et quitte ainsi la au moins une position angulaire de coopération entre la surface périphérique et la surface d'arrêt en rotation, tourne, puis s'engage à nouveau avec la surface d'arrêt en rotation dans une autre position angulaire de la vis ; une phase principale lors de laquelle la vis est immobilisée en rotation et en translation.

Selon un mode avantageux de l'invention, lors de l'étape (ii) de rotation de la vis et/ou lors de l'étape (x) de rotation de la vis, la vis est tournée d'un angle compris entre 90° et 270°, éventuellement la vis est tournée d'un tiers de tour.

Dans un mode de réalisation non revendiqué, l'invention a pour objet un rotor de turbomachine, notamment un turboréacteur d'aéronef, comprenant : une vis munie d'une tête et d'une tige filetée, la tige filetée s'étendant selon un axe géométrique, et une pièce munie d'un orifice traversé par la vis, remarquable en ce que la tête a au moins une surface périphérique dont le rayon varie autour de l'axe géométrique ; et la première pièce est munie d'une surface d'arrêt en rotation de la vis apte à coopérer avec ladite surface périphérique dans au moins une position angulaire de la vis, et/ou la première pièce est munie d'une surface de rétention qui est apte à retenir axialement la tête dans au moins une position angulaire de ladite tête.

Selon un mode avantageux de l'invention, la largeur axiale de la gorge est comprise entre 100 et 110% de la hauteur de la partie excentrée de la tête de vis. La rotation de la vis autour de l'axe de la tige filetée permet ainsi de faire pénétrer la partie excentrée de la tête de vis dans la gorge, soit avec du jeu (101 à 110%), soit en montage serré (100%). La rotation de la vis peut se faire à la main ou au moyen d'un outil de serrage si la tête est creuse ou dispose d'une empreinte pour un tournevis par exemple.

Selon un mode avantageux de l'invention, la première pièce et/ou la deuxième pièce est un tambour de turbomachine, un carter de turbomachine, ou une virole de turbomachine, préférentiellement un turboréacteur d'aéronef.

### Avantages apportés

Les mesures de l'invention sont intéressantes en ce que l'ensemble et le rotor selon l'invention et les procédés de montage et de démontage permettent, sans outil spécifique, de monter / de démonter des pièces dont l'accès à un des côtés d'une des pièces est impossible, ce montage / démontage étant réversible puisqu'aucun des éléments n'est endommagé lors du montage ou du démontage.

### Brève description des dessins

D'autres caractéristiques et avantages de la présente invention seront mieux compris à l'aide de la description et des dessins parmi lesquels :
- La figure 1 représente une turbomachine axiale ;
- La figure 2 est un schéma d'un compresseur de turbomachine ;
- La figure 3 décrit une vis à tête excentrée ;
- La figure 4 décrit une vis dont la tête comprend une partie excentrée ;
- La figure 5 décrit un ensemble selon l'invention ;
- Les figure 6A et 6B décrivent la position de la vis lors de son introduction dans la première pièce ;
- Les figures 7A et 7B décrivent la position de la vis lors de l'assemblage ;
- Les figures 8A et 8B décrivent la position de la vis lors du démontage ;
- Les figures 9A et 9B décrivent un ensemble selon l'invention, éclaté et assemblé, respectivement.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

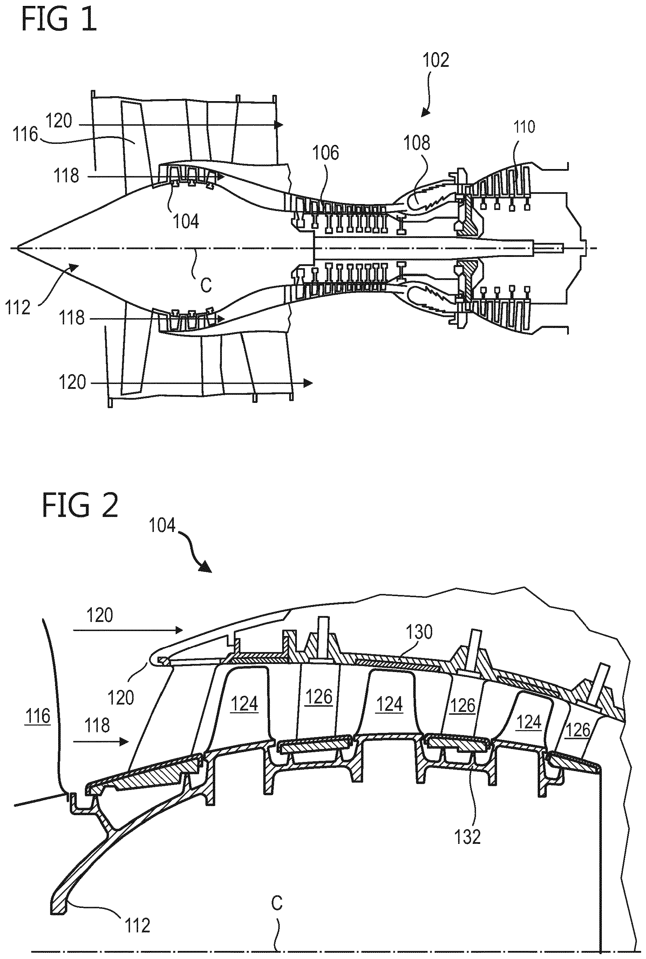

La figure 1 représente de manière simplifiée une turbomachine axiale. Il s'agit dans ce cas précis d'un turboréacteur double-flux 102. Le turboréacteur 102 comprend un premier niveau de compression, dit compresseur basse-pression 104, un deuxième niveau de compression, dit compresseur haute-pression 106, une chambre de combustion 108 et un ou plusieurs niveaux de turbines 110. En fonctionnement, la puissance mécanique de la turbine 110 transmise via l'arbre central jusqu'au rotor 112 met en mouvement les deux compresseurs 104 et 106. Ces derniers comportent plusieurs rangées d'aubes de rotor associées à des rangées d'aubes de stator. La rotation du rotor autour de son axe de rotation C permet ainsi de générer un débit d'air et de comprimer progressivement ce dernier jusqu'à l'entrée de la chambre de combustion 108.

Un ventilateur d'entrée communément désigné fan ou soufflante 116 est couplé au rotor 112 et génère un flux d'air qui se divise en un flux primaire 118 traversant les différents niveaux susmentionnés de la turbomachine, et en un flux secondaire 120 traversant un conduit annulaire (partiellement représenté) le long de la machine pour ensuite rejoindre le flux primaire en sortie de turbine. Des moyens de démultiplication, tel un réducteur épicycloïdal, peut réduire la vitesse de rotation de la soufflante et/ou du compresseur basse pression par rapport à la turbine associée. Le flux secondaire peut être accéléré de sorte à générer une réaction de poussée nécessaire au vol d'un avion. Les flux primaire 118 et secondaire 120 sont des flux annulaires coaxiaux et emmanchés l'un dans l'autre. Ils sont canalisés par le carter de la turbomachine et/ou des viroles. A cet effet, le carter présente des parois cylindriques qui peuvent être internes et externes.

La figure 2 est une vue en coupe d'un compresseur d'une turbomachine axiale telle que celle de la figure 1. Le compresseur peut être un compresseur basse-pression 104. On peut y observer une partie de la soufflante 116 et le bec de séparation 122 du flux primaire 118 et du flux secondaire 120. Le rotor 112 comprend plusieurs rangées d'aubes rotoriques 124, en l'occurrence trois. Il peut être un tambour monobloc aubagé, ou comprendre des aubes à fixation par queue d'aronde.

Le compresseur basse pression 104 comprend plusieurs redresseurs, en l'occurrence quatre, qui contiennent chacun une rangée d'aubes statoriques 126. Certaines aubes statoriques peuvent être à orientation réglable, également appelé aubes à calage variable. Les redresseurs sont associés au fan 116 ou à une rangée d'aubes rotoriques pour redresser le flux d'air, de sorte à convertir la vitesse du flux en pression, notamment en pression statique.

Les aubes statoriques 126 s'étendent essentiellement radialement depuis un carter extérieur 130, et peuvent y être fixées et immobilisées à l'aide d'axes.

Le carter extérieur 130 et la virole interne 132 peuvent être composés de plusieurs segments annulaires formant une unité cinématique. Les segments sont assemblés directement les uns aux autres ou au moyen de brides. Les assemblages peuvent être fait au moyen d'une couronne de vis.

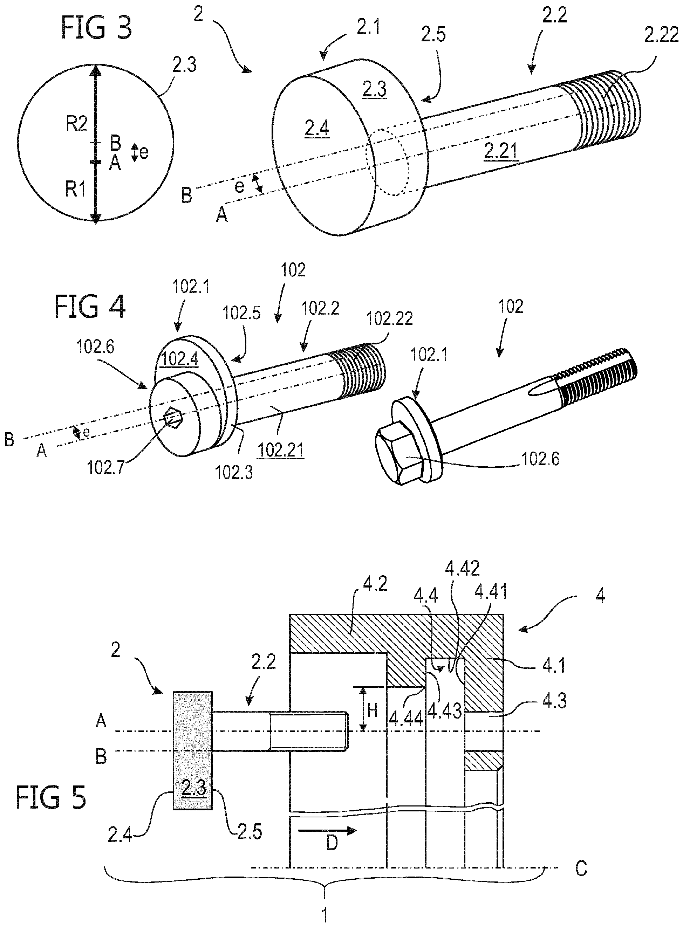

La figure 3 décrit un exemple de vis à tête excentrée participant à l'ensemble selon l'invention. La vis 2 comprend une tête 2.1 et une tige filetée 2.2. La tige filetée 2.2 peut être constituée d'une partie cylindrique non filetée 2.21 et d'un filet 2.22. La tige filetée 2.2 s'étend selon l'axe A. La tête 2.1 est centrée sur l'axe B qui est parallèle et à une distance e de l'axe A. La tête 2.1 a une surface périphérique cylindrique 2.3 délimitée par une surface plane 2.4 à l'extrémité de la vis et une surface plane 2.5 à la base de la tige filetée 2.2.

La figure 3 matérialise aussi un exemple des positions des rayons mini R1 et maxi R2 du profil elliptique ou circulaire de la surface périphérique 2.3 par rapport à l'axe A.

La figure 4 représente deux alternatives à la vis 2 de la figure 3. Les numéros de références sont incrémentés de 100. La vis 102 à tête excentrée n'a en fait qu'une partie de sa tête 102.1 qui est excentrée par rapport à l'axe A de la tige filetée 102.2. Le reste de la tête 102.6 est centré sur l'axe A de la tige filetée 102.2. Comme représenté sur la figure 4, la tête de vis 102.1, 102.6 peut être munie de moyens 102.7 permettant d'interagir avec un outil de serrage. Ces moyens peuvent se présenter sous diverses formes bien connues, notamment cruciforme, Allen, etc. Ces moyens peuvent aussi être prévus sur la vis 2 de la figure 3, c'est-à-dire lorsque toute la tête est excentrée par rapport à l'axe A.

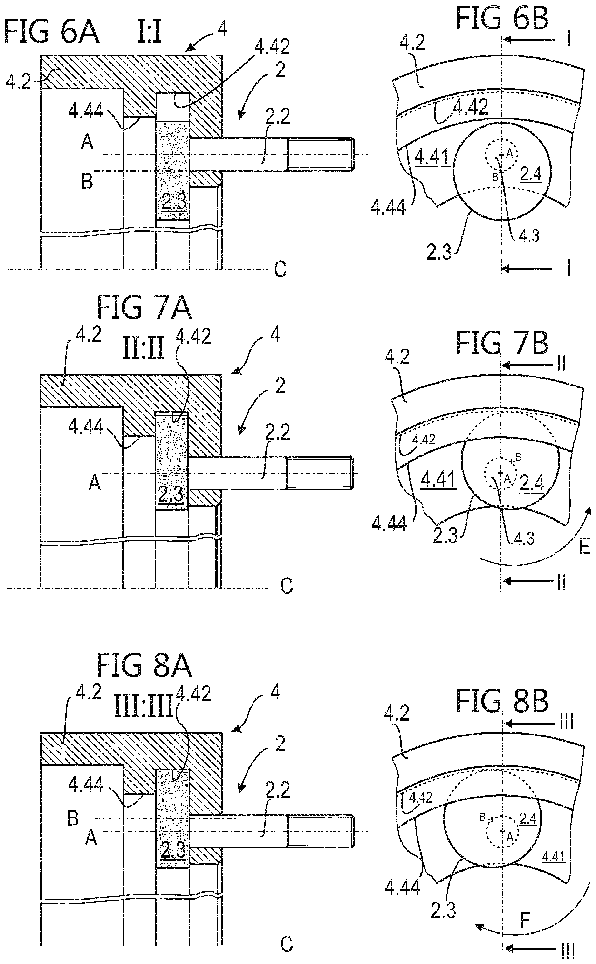

La figure 5 représente un ensemble selon l'invention. Note : les figures 5 à 9 représentent l'ensemble avec la vis 2 mais un ensemble similaire avec une vis 102 fonctionne de la même manière ; la tête de la vis 2.1 a été grisée pour faciliter la lecture des dessins. L'ensemble comprend une vis 2 et une première pièce 4. Dans cet exemple particulier, la pièce 4 est une pièce axisymétrique d'axe principal de symétrie l'axe C. La pièce 4 comprend un flanc 4.1 et une paroi annulaire 4.2. Le flanc 4.1 comprend un orifice axial débouchant 4.3. L'orifice 4.3 a pour diamètre une valeur comprise entre le diamètre de la tige filetée 2.2 et le diamètre de la tête de vis 2.1. La première pièce 4 dispose d'une gorge 4.4 aménagée radialement et ouverte vers l'intérieur. La gorge 4.4 a un fond 4.42 délimité par deux flancs 4.41 et 4.43. Le flanc 4.43 est délimité par la couronne 4.44. La position de la couronne 4.44 par rapport à l'orifice 4.3 est telle qu'elle permet à la surface 2.5 de la tête de vis 2.1 à la base de la tige filetée 2.2 de venir au contact du flanc 4.41. Cette position de la couronne 4.44 est matérialisée par la notation H qui est la distance minimale entre la couronne et l'axe A et qui est comprise entre R1 et R2. Le fond 4.42 de la gorge 4.4 est moins excentré par rapport à l'orifice 4.3 que la tête 2.1 est excentrée par rapport à la tige filetée 2.2. Ceci permet, comme discuté plus bas en rapport avec les figures 7B et 8B, de bloquer la tête de vis 2.1 en rotation par le contact de la surface périphérique 2.3 avec le fond 4.42.

La vis 2 est introduite dans la première pièce 4 selon la flèche D parallèle à l'axe A à de la tige filetée 2.2 et à l'axe de l'orifice 4.3. La vis 2 est orientée de telle sorte que l'excentricité de la tête de vis 2.1 soit opposée à la gorge par rapport à l'axe A. Ainsi dans cet exemple, la vis est positionnée de telle manière que l'axe B est dans la position la plus basse possible en-dessous de l'axe A.

La figure 6A représente une coupe selon I:I défini en figure 6B. La vis 2 est complètement introduite dans l'orifice 4.3, la tête étant au contact de la pièce 4.

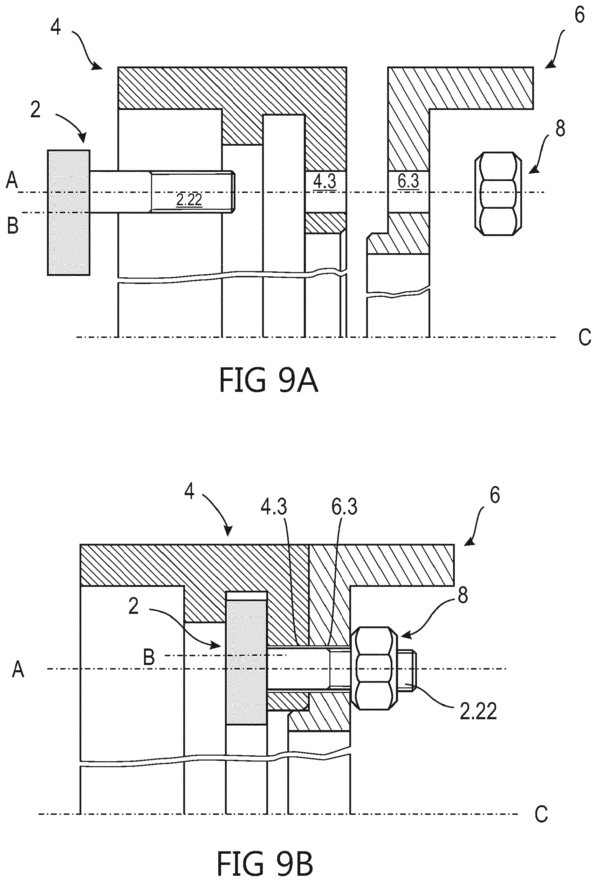

Suite à l'introduction de la vis 2 dans l'orifice 4.3, la vis 2 est pivotée atour de l'axe A du filet (qui est aussi l'axe de l'orifice 4.3). Ce pivotement peut être réalisé manuellement ou par un outil, avant que ne soient réalisées d'autres étapes du montage. Alternativement ou en complément, ce pivotement peut être induit par le serrage de l'écrou (8 voir figure 9) qui va inciter la vis 2 à tourner jusqu'à ce que la surface périphérique 2.3 soit en butée contre le fond 4.42 de la gorge 4.4.

Les figures 7A et 7B représentent l'ensemble de la vis 2 et de la première pièce 4 une fois la vis 2 en butée angulaire au montage. C'est une des au moins une position angulaire d'arrêt en rotation de la vis. La figure 7A est une vue selon l'axe II:II défini en figure 7B. La hauteur de la tête, c'est-à-dire la distance entre les faces 2.4 et 2.5, et la largeur de la gorge, c'est-à-dire la distance entre les faces 4.41 et 4.43 sont sensiblement équivalente. Ceci permet de tourner la tête de vis de telle sorte que le frottement maintienne la tête de vis 2.1 en position dans la gorge 4.4. Il est ainsi possible de manipuler l'ensemble 2, 4 sans se soucier du fait que la vis 2 puisse s'échapper de l'orifice 4.3. Aussi, tout effort axial involontaire sur la vis 2, par exemple au moment où l'écrou est positionné sur le filet, est sans conséquence.

Alternativement, l'assemblage peut présenter un jeu jusqu'à 10% de la hauteur de la tête de vis 2.1. Le contact entre la surface périphérique 2.3 et le fond de la gorge 4.42 se fait du côté droit de l'axe II:II sur la figure 7B car la vis a été pivotée dans le sens de la flèche E.

Les figures 8A et 8B représentent l'ensemble de la vis 2 et de la première pièce 4 lorsque la vis 2 est en butée angulaire lors du démontage. C'est une autre des au moins une position angulaire d'arrêt en rotation de la vis. En effet, sous l'action de l'écrou (8 voir figure 9) lors de son desserrage, la vis est d'abord entraînée en rotation depuis la position en butée des figures 7A et 7B jusqu'à la position en butée des figures 8A et 8B dans le sens de la flèche F. Le démontage à l'aveugle ne permet pas d'empêcher la rotation de la vis 2 à l'aide d'un outil appliqué sur la tête de vis 2.1. Ainsi, en partie, le premier tour de desserrage de l'écrou va faire tourner la tête de vis 2.1 autour de l'axe A dans le sens de la flèche F. Une fois la surface périphérique 2.3 de la tête de vis 2.1 (à nouveau) en butée avec le fond de la gorge 4.42, le desserrage de l'écrou va continuer sans que la vis 2 ne bouge.

Une fois l'écrou et la seconde pièce 6 déposés, la vis peut être pivotée et positionnée comme en figure 6A, pour pouvoir être extraite de la première pièce 4, parallèlement à l'axe de l'orifice.

La figure 9A représente un éclaté de l'ensemble comprenant la vis, l'écrou et les première et seconde pièces à assembler. Les pièces 4, 6 sont dans cet exemple des pièces axisymétriques d'axe principal de symétrie C. Des surfaces et des chanfreins sont aménagés pour positionner précisément les pièces l'une par rapport à l'autre. La seconde pièce dispose d'un orifice 6.3 débouchant dont le diamètre est supérieur au diamètre de la tige filetée 2.2. Le diamètre de l'orifice 6.3 est tel que l'écrou 8, éventuellement avec une rondelle, puisse venir serrer la vis 2 en s'appuyant sur la deuxième pièce 6.

La figure 9B représente l'ensemble monté. La vis 2 traverse l'orifice 4.3 de la première pièce 4 ainsi que l'orifice 6.3 de la seconde pièce 6. L'écrou 8 vient engager le filet 2.22 pour maintenir en contact les première et seconde pièces 4, 6. Préférentiellement, il y a plusieurs orifices et plusieurs vis. Par exemple, 4, 30 ou 50 vis peuvent être prévues, angulairement réparties sur les flancs 4.1 des pièces 4, 6. La partie tubulaire interne de la deuxième pièce qui est chanfreinée pour pénétrer dans un trou central de la première pièce peut s'étendre plus profondément dans la première pièce, pour créer ainsi une chambre annulaire pour la tête de vis.

Il est entendu que dans des modes de réalisation qui ne font pas partie de l'invention, qu'une gorge peut être prévue radialement à l'extérieur de la paroi annulaire, et de même le flan peut s'étendre radialement extérieurement à la paroi annulaire. Aussi, l'orifice peut être radial et la gorge aménagée sur un méplat de la portion annulaire.

Plusieurs orifices à des positions radiales différentes pour, par exemple, assembler plus de 2 pièces ensemble peuvent également être prévus.

## Revendications

1. Rotor (112) de turbomachine (102), notamment de turboréacteur, le rotor comprenant un ensemble rotorique de turbomachine, l'ensemble comprenant :
- une vis (2, 102) munie d'une tête (2.1, 102.1, 102.6) et d'une tige filetée (2.2, 102.2),
∘ la tige filetée (2.2, 102.2) s'étendant selon un axe géométrique (A),
∘ la tête (2.1, 102.1, 102.6) ayant au moins une surface périphérique (2.3, 102.3) décrivant un profil elliptique ou circulaire, le centre d'un tel profil circulaire étant distant de l'axe (A), le profil décrivant une courbe variant d'un rayon mini (R1) à un rayon maxi (R2) par rapport à l'axe (A),
- et une première pièce (4) destinée à être assemblée au moins au moyen de ladite vis (2, 102) à une seconde pièce (6), la première pièce (4) étant munie d'un orifice (4.3) traversé par la vis, d'un diamètre strictement inférieur à deux fois le rayon mini (R1) ; la première pièce (4) comprenant une surface d'arrêt (4.42) en rotation de la vis apte à coopérer avec ladite surface périphérique (2.3, 102.3) dans au moins une position angulaire de la vis (2, 102),
- la première pièce (4) comprenant une paroi annulaire (4.2) pourvue d'une gorge (4.4) dont le fond (4.42) forme ladite surface d'arrêt (4.42), la gorge (4.4) étant positionnée radialement à l'intérieur de ladite paroi annulaire (4.2),
- l'ensemble comprenant en outre ladite seconde pièce (6) munie d'un orifice (6.3) traversé par la vis (2, 102), la première pièce et la deuxième pièce définissant entre elles une chambre annulaire dans laquelle est disposée la tête de la vis.

2. Rotor selon la revendication 1, **caractérisé en ce que** la première pièce (4) est de forme générale axisymétrique autour d'un axe (C) parallèle à l'axe géométrique (A), la pièce comprenant un flanc (4.1) pourvu dudit orifice (4.3).

3. Rotor selon l'une des revendications 1 ou 2, **caractérisé en ce que** la pièce est pourvue d'une surface d'arrêt axial (4.43) formant une butée axiale de la tête de vis (2.1, 102.1, 102.6), lorsque la vis est dans ladite au moins une position angulaire.

4. Rotor selon la revendication 3, **caractérisé en ce que** la surface d'arrêt axial (4.43) a un bord radial intérieur (4.44) distant de l'axe géométrique (A) d'une distance (H) comprise entre le rayon mini (R1) et le rayon maxi (R2), ces valeurs (R1, R2) étant exclues.

5. Rotor selon l'une des revendications 2 à 4, **caractérisé en ce qu'**il
comprend une pluralité de vis (2, 102) dans une pluralité d'orifices (4.3, 6.3) des première et seconde pièces (4, 6) distribués angulairement autour de l'axe (C) de symétrie de la première pièce (4).

6. Rotor selon la revendication 5, **caractérisé en ce que** la seconde pièce est de forme axisymétrique autour de l'axe de symétrie de la première pièce (4) et que surface d'arrêt
en rotation (4.42) est annulaire et de rayon constant autour de l'axe (C) de symétrie des pièces (4, 6), les vis étant identiques.

7. Rotor (112) selon l'une des revendications 1 à 6, le rotor comprenant un axe de rotation (C), l'axe géométrique (A) étant parallèle à l'axe de rotation (C), **caractérisé en ce qu'**il comprend une bride annulaire de fixation, l'orifice (4.3) étant formé au travers de la bride.

8. Rotor selon la revendication 7, **caractérisé en ce qu'**il est un rotor de compresseur, notamment de compresseur basse-pression.

9. Rotor selon l'une des revendications 7 à 8, **caractérisé en ce qu'**il est configuré pour tourner à au moins 3 000 tr/min, préférentiellement au moins 8 000 tr/min et plus préférentiellement au moins 15 000 tr/min.

10. Procédé d'assemblage d'une turbomachine comprenant un rotor, **caractérisé en ce que** le rotor est conforme à l'une des revendications 1 à 9, le procédé comprenant les étapes suivantes :
(i) introduction de la vis (2, 102) parallèlement à l'axe de l'orifice (4.3) ;
(ii) rotation de la vis (2, 102) autour de l'axe de la tige filetée (A) jusqu'au contact entre ladite surface périphérique (2.3, 102.3) et ladite surface d'arrêt en rotation (4.42).

11. Procédé selon la revendication 10 en combinaison d'un ensemble selon la revendication 3, **caractérisé en ce qu'**il comprend en outre une étape (iii) de mise en contact axial de la tête de vis (2.1, 102.1, 102.6) avec ladite surface d'arrêt axial (4.43), la tête (2.1, 102.1, 102.6) étant déplacée axialement vers la surface d'arrêt axial (4.43) dans le sens inverse du sens d'introduction de la vis de l'étape (i) d'introduction.

12. Procédé selon l'une des revendications 10 à 11, **caractérisé en ce qu'**il comprend en outre :
(iv) une étape d'accostage de la deuxième pièce (6) du côté opposé à la tête de vis (2.1, 102.1), de telle sorte que la tige filetée (2.2, 102.2) traverse un orifice (6.3) de la deuxième pièce (6) ;
(v) le serrage d'un écrou (8) sur la tige filetée (2.2, 102.2) du côté de la seconde pièce (6) opposé à la première pièce (4) ;
la rotation de l'écrou lors de l'étape (v) entraînant la rotation de la vis de l'étape (ii).

13. Procédé de démontage d'une turbomachine comprenant un rotor, caractérisé en ce le rotor est conforme à l'une des revendications 1 à 9, le procédé comprenant les étapes suivantes :
(x) rotation de la vis autour de l'axe de la tige filetée (A) de manière à décaler angulairement la surface périphérique (2.3, 102.3) de la surface d'arrêt axial (4.43) ;
(xi) translation de la vis le long de l'axe (A) de manière à la sortir de l'orifice (4.3).

14. Procédé de démontage selon la revendication 13, d'une turbomachine assemblée par le procédé de la revendication 12, **caractérisé en ce que** l'étape (x) est précédée de l'étape suivante :
(ix) desserrage de l'écrou (8) comprenant :
- une phase initiale, lors de laquelle la rotation de l'écrou (8) entraîne la rotation de la vis (2, 102), jusqu'à ce que la surface périphérique (2.3, 102.3) se dégage du contact de la surface d'arrêt en rotation (4.42) et quitte ainsi la au moins une position angulaire de coopération entre la surface périphérique (2.3, 102.3) et la surface d'arrêt en rotation (4.42), tourne, puis s'engage à nouveau avec la surface d'arrêt en rotation (4.42) dans une autre position angulaire de la vis (2, 102) ;
- une phase principale lors de laquelle la vis (2, 102) est immobilisée en rotation et en translation.

15. Procédé selon l'une des revendications 10 à 14, **caractérisé en ce que** lors de l'étape (ii) de rotation de la vis et/ou lors de l'étape (x) de rotation de la vis, la vis est tournée d'un angle compris entre 90° et 270°, éventuellement la vis est tournée d'un tiers de tour.

## Patentansprüche

1. Rotor (112) einer Turbomaschine (102), insbesondere eines Turbostrahltriebwerks, wobei der Rotor eine Turbomaschinen-Rotorbaugruppe umfasst, wobei die Baugruppe Folgendes umfasst:
- eine Schraube (2, 102) mit einem Kopf (2.1, 102.1, 102.6) und einer Gewindestange (2.2, 102.2),
- wobei sich die Gewindestange (2.2, 102.2) entlang einer geometrischen Achse (A) erstreckt
- wobei der Kopf (2.1, 102.1, 102.6) mindestens eine Umfangsfläche (2.3, 102.3) aufweist, die ein elliptisches oder kreisförmiges Profil beschreibt, wobei der Mittelpunkt dieses kreisförmigen Profils in einem Abstand von der Achse (A) liegt, wobei das Profil eine Kurve beschreibt, die von einem minimalen Radius (R1) bis zu einem maximalen Radius (R2) in Bezug auf die Achse (A) variiert,
- und ein erstes Teil (4), das zumindest mittels der Schraube (2, 102) zusammen mit einem zweiten Teil (6) befestigt ist, wobei das erste Teil (4) mit einer Bohrung (4.3) versehen ist, die von der Schraube durchlaufen wird und einen Durchmesser aufweist, der deutlich kleiner ist als das Doppelte des minimalen Radius (R1); das erste Teil (4) umfasst eine Anschlagfläche (4.42) für die Drehung der Schraube, die in der Lage ist, mit der Umfangsfläche (2.3, 102.3) in mindestens einer Winkelposition der Schraube (2, 102) zusammenzuwirken,
- das erste Teil (4) eine ringförmige Wand (4.2) aufweist, die mit einem Ansatz (4.4) versehen ist, dessen Boden (4.42) die Anschlagfläche (4.42) bildet, wobei der Ansatz (4.4) eine radiale Stellung im Inneren der ringförmigen Wand (4.2) aufweist,
- die Baugruppe außerdem ein zweites Teil (6) umfasst, das mit einer Bohrung (6.3) versehen ist, die von der Schraube (2, 102) durchlaufen wird, wobei das erste Teil mit dem zweiten Teil eine ringförmige Aussparung bildet, in die der Kopf der Schraube passt.

2. Rotor nach Anspruch 1, **dadurch gekennzeichnet, dass** das erste Teil (4) eine allgemein achsensymmetrische Form um eine zur geometrischen Achse (A) parallele Achse (C) aufweist, wobei das Teil eine Fläche (4.1) enthält, die die vorgenannte Bohrung (4.3) aufweist.

3. Rotor nach Anspruch 1 oder 2, **dadurch gekennzeichnet, dass** das Teil mit einer axialen Anschlagfläche (4.43) versehen ist, die als axialer Anschlag für den Schraubenkopf (2.1, 102.1, 102.6) dient, wenn sich die Schraube in mindestens einer Winkelstellung befindet.

4. Rotor nach Anspruch 3, **dadurch gekennzeichnet, dass** die axiale Anschlagfläche (4.43) eine innere radiale Kante (4.44) aufweist, die sich in einem Abstand von der geometrischen Achse (A) befindet, wobei der Abstand (H) zwischen dem minimalen Radius (R1) und dem maximalen Radius (R2) liegt, wobei diese Werte (R1, R2) ausgeschlossen sind.

5. Rotor nach einem der Ansprüche 2 bis 4, **dadurch gekennzeichnet, dass** er eine Vielzahl von Schrauben (2, 102) aufweist, für die eine Vielzahl von Bohrungen (4.3, 6.3) des ersten und zweiten Teils (4, 6) vorgesehen sind, die um die Symmetrieachse (C) des ersten Teils (4) herum winkelmäßig verteilt sind.

6. Rotor nach Anspruch 5, **dadurch gekennzeichnet, dass** das zweite Teil eine achsensymmetrische Form um die Symmetrieachse des ersten Teils (4) aufweist und dass die Drehanschlagfläche (4.42) ringförmig ist und einen konstanten Radius um die Symmetrieachse (C) der Teile (4, 6) aufweist, wobei die Schrauben identisch sind.

7. Rotor (112) nach einem der Ansprüche 1 bis 6 mit einer Drehachse (C), wobei die geometrische Achse (A) parallel zur Drehachse (C) verläuft, **dadurch gekennzeichnet, dass** er einen ringförmigen Befestigungsflansch aufweist, wobei die Bohrung (4.3) durch den Flansch gebildet wird.

8. Rotor nach Anspruch 7, **dadurch gekennzeichnet, dass** er ein Verdichterrotor ist, insbesondere ein Niederdruckverdichterrotor.

9. Rotor nach einem der Ansprüche 7 bis 8, **dadurch gekennzeichnet, dass** er für eine Drehzahl von mindestens 3.000 U/min, vorzugsweise von mindestens 8.000 U/min, besonders bevorzugt von mindestens 15.000 U/min ausgelegt ist.

10. Ein Verfahren zum Zusammenbau einer Turbomaschine mit einem Rotor, **dadurch gekennzeichnet, dass** der Rotor gemäß einem der Ansprüche 1 bis 9 ist, wobei das Verfahren die folgenden Schritte umfasst:
(i) Einsetzen der Schraube (2, 102) parallel zur Achse der Bohrung (4.3);
(ii) Drehen der Schraube (2, 102) um die Achse der Gewindestange (A), bis die Umfangsfläche (2.3, 102.3) die Drehanschlagfläche (4.42) berührt.

11. Ein Verfahren nach Anspruch 10 in Verbindung mit einer Baugruppe nach Anspruch 3, **dadurch gekennzeichnet, dass** es weiterhin einen Schritt (iii) des axialen Kontakts des Schraubenkopfes (2.1, 102.1, 102.6) mit der axialen Anschlagfläche (4.43) umfasst, wobei der Kopf (2.1, 102.1, 102.6) axial in Richtung der axialen Anschlagfläche (4.43) in der entgegengesetzten Richtung zur Schraubeneinführrichtung von Schritt (i) bewegt wird.

12. Ein Verfahren nach einem der Ansprüche 10 bis 11, **dadurch gekennzeichnet, dass** es ferner umfasst:
(iv) einen Schritt der Befestigung des zweiten Teils (6) auf der dem Schraubenkopf (2.1, 102.1) gegenüberliegenden Seite, so dass die Gewindestange (2.2, 102.2) durch eine Bohrung (6.3) des zweiten Teils (6) läuft;
(v) Festziehen einer Mutter (8) auf der Gewindestange (2.2, 102.2) auf der dem ersten Teil (4) gegenüberliegenden Seite des zweiten Teils (6);
wobei Drehen der Mutter in Schritt (v) führt zum Drehen der Schraube in Schritt (ii).

13. Ein Verfahren zum Ausbau einer Turbomaschine mit einem Rotor, **dadurch gekennzeichnet, dass** der Rotor einem der Ansprüche 1 bis 9 entspricht, wobei das Verfahren die folgenden Schritte umfasst:
(x) Drehen der Schraube um die Achse der Gewindestange (A), um die Umfangsfläche (2.3, 102.3) gegenüber der axialen Anschlagfläche (4.43) winkelmäßig zu versetzen;
(xi) Verschieben der Schraube entlang der Achse (A) bis zum Austritt aus der Bohrung (4.3).

14. Ein Verfahren zur Demontage einer Turbomaschine nach Anspruch 13, die nach dem in Anspruch 12 beschriebenen Verfahren zusammengebaut wurde, **dadurch gekennzeichnet, dass** dem Schritt (x) der folgende Schritt vorausgeht:
(ix) Lösen der Mutter (8), das Folgendes umfasst:
- eine Anfangsphase, in der die Drehung der Mutter (8) eine Drehung der Schraube (2, 102) hervorruft, bis die Umfangsfläche (2.3, 102.3) nicht mehr in Kontakt mit der Drehsperrfläche (4. 42) ist und somit mindestens eine Winkelposition des Zusammenwirkens zwischen der Umfangsfläche (2.3, 102.3) und der Drehsperrfläche (4.42) hinterlässt, sich dreht und dann in einer anderen Winkelposition der Schraube (2, 102) wieder in Kontakt mit der Drehsperrfläche (4.42) kommt;
- eine Hauptphase, in der die Schraube (2, 102) so arretiert ist, dass sie weder eine Rotations- noch eine Translationsbewegung zulässt.

15. Ein Verfahren nach einem der Ansprüche 10 bis 14, **dadurch gekennzeichnet, dass** im Schritt (ii) des Drehens der Schraube und/oder im Schritt (x) des Drehens der Schraube die Schraube um einen Winkel zwischen 90° und 270°, gegebenenfalls um ein Drittel einer Umdrehung, gedreht wird.

## Claims

1. Rotor (112) for a turbomachine (102), in particular for a turbojet engine, the rotor comprising a turbomachine rotor assembly, the assembly comprising:
- a screw (2, 102) provided with a head (2.1, 102.1, 102.6) and a threaded rod (2.2, 102.2),
∘ the threaded rod (2.2, 102.2) extending along a geometric axis (A),
∘ the head (2.1, 102.1, 102.6) having at least one peripheral surface (2.3, 102.3) describing an elliptical or circular profile, the center of such a circular profile being distant from the axis (A), the profile describing a curve varying from a minimum radius (R1) to a maximum radius (R2) relative to the axis (A),
- and a first part (4) intended to be assembled at least by means of said screw (2, 102) to a second part (6), the first part (4) being provided with a hole (4.3) through which the screw passes, of a diameter strictly less than twice the minimum radius (R1); the first part (4) comprising a rotation stop surface (4.42) of the screw, capable of cooperating with said peripheral surface (2.3, 102.3) in at least one angular position of the screw (2, 102),
- the first part (4) comprising an annular wall (4.2) provided with a groove (4.4) whose bottom (4.42) forms said stop surface (4.42), the groove (4.4) being positioned radially inside said annular wall (4.2),
- the assembly further comprising said second part (6) provided with a hole (6.3) through which the screw (2, 102) passes, the first part and the second part defining between them an annular chamber in which the head of the screw is disposed.

2. Rotor according to claim 1, **characterized in that** the first part (4) is of generally axisymmetrical shape around an axis (C) parallel to the geometric axis (A), the part comprising a flank (4.1) provided with said hole (4.3).

3. Rotor according to any of claims 1 and 2, **characterized in that** the part is provided with an axial stop surface (4.43) forming an axial stop of the screw head (2.1, 102.1, 102.6), when the screw is in said at least one angular position.

4. Rotor according to claim 3, **characterized in that** the axial stop surface (4.43) has an inner radial edge (4.44) distant from the geometric axis (A) by a distance (H) comprised between the minimum radius (R1) and the maximum radius (R2), these values (R1, R2) being excluded.

5. Rotor according to any of claims 2 to 4, **characterized in that** it comprises a plurality of screws (2, 102) in a plurality of holes (4.3, 6.3) of the first and second parts (4, 6) angularly distributed around the symmetry axis (C) of the first part (4).

6. Rotor according to claim 5, **characterized in that** the second part is of axisymmetrical shape around the symmetry axis of the first part (4) and **in that** the rotation stop surface (4.42) is annular and of constant radius around the symmetry axis (C) of the parts (4, 6), the screws being identical.

7. Rotor (112) according to any of claims 1 to 6, the rotor comprising an axis of rotation (C), the geometric axis (A) being parallel to the axis of rotation (C), **characterized in that** it comprises an annular fixing flange, the hole (4.3) being formed through the flange.

8. Rotor according to claim 7, **characterized in that** it is rotor of a compressor, in particular of a low-pressure compressor.

9. Rotor according to any of claims 7 and 8, **characterized in that** it is configured to rotate at at least 3000 rpm, preferably at least 8000 rpm and more preferably at least 15000 rpm.

10. A method of assembling a turbomachine comprising a rotor, **characterized in that** the rotor is according to any of claims 1 to 9, the method comprising the following steps:
(i) introducing the screw (2, 102) parallel to the axis of the hole (4.3);
(ii) rotating the screw (2, 102) around the axis of the threaded rod (A) until contact is made between said peripheral surface (2.3, 102.3) and said rotation stop surface (4.42).

11. Method according to claim 10 in combination with an assembly according to claim 3, **characterized in that** it further comprises a step (iii) of bringing the screw head (2.1, 102.1, 102.6) into axial contact with said axial stop surface (4.43), the head (2.1, 102.1, 102.6) being moved axially towards the axial stop surface (4.43) in the opposite direction to the direction of insertion of the screw of the step (i) of insertion.

12. Method according to any of claims 10 and 11, **characterized in that** it further comprises:
(iv) a step of docking the second part (6) on the side opposite the screw head (2.1, 102.1), so that the threaded rod (2.2, 102.2) passes through an hole (6.3) of the second part (6);
(v) tightening a nut (8) on the threaded rod (2.2, 102.2) on the side of the second part (6) opposite the first part (4);
the rotation of the nut in step (v) causing the rotation of the screw in step (ii).

13. Method of disassembling a turbomachine comprising a rotor, **characterised in that** the rotor is according to any of claims 1 to 9, the method comprising the following steps:
(x) rotation of the screw around the axis of the threaded rod (A) so as to angularly offset the peripheral surface (2.3, 102.3) from the axial stop surface (4.43);
(xi) translation of the screw along the axis (A) so as to remove it from the hole (4.3).

14. Method of disassembling, according to claim 13, of a turbomachine assembled by the method according to claim 12, **characterized in that** the step (x) is preceded by the following step:
(ix) loosening the nut (8) comprising:
- an initial phase, during which the rotation of the nut (8) causes the rotation of the screw (2, 102), until the peripheral surface (2.3, 102.3) disengages from the contact of the rotation stop surface (4. 42) and thus leaves the at least one angular position of cooperation between the peripheral surface (2.3, 102.3) and the rotation stop surface (4.42), rotates and then re-engages with the rotation stop surface (4.42) in another angular position of the screw (2, 102);
- a main phase in which the screw (2, 102) is prevented from rotating and translating.

15. Method according to any of claims 10 to 14, **characterized in that** in step (ii) of rotating the screw and/or in step (x) of rotating the screw, the screw is rotated by an angle between 90° and 270°, optionally the screw is rotated by one third of a revolution.
